Europäisches Patentamt

European Patent Office

Office européen des brevets

(11) Publication number: **0 218 231**
A2

# (12) EUROPEAN PATENT APPLICATION

(21) Application number: **86113850.1**

(22) Date of filing: **07.10.86**

(51) Int. Cl.⁴: **G 11 B 23/03**

(30) Priority: **07.10.85 JP 224509/85**

(43) Date of publication of application: **15.04.87**
**Bulletin 87/16**

(84) Designated Contracting States: **DE FR GB**

(71) Applicant: **Hitachi Maxell Ltd., No 1-1-88, Ushitora Ibaraki-shi, Osaka-fu (JP)**

(72) Inventor: **Koyama, Mitsuyoshi, 1468-5, Sanora Furumagi Ishigemachi, Yuki-gun Ibaragi-ken (JP)**
Inventor: **Matsushima, Seiichi, 2-13-6, Umezono Sakura-mura, Niihari-gun Ibaragi-ken (JP)**
Inventor: **Umeda, Jun-ichi, 6-9 Nishinodai Yawara-mura, Tsukuba-gun Ibaragi-ken (JP)**
Inventor: **Kanazawa, Yasunori, 1-4-5, Motoyokoyama-cho, Hachioji-shi Tokyo-to (JP)**
Inventor: **Nakamori, Yoshiyuki, 1012-8, Shinishige Ishigemachi, Yuki-gun Ibaragi-ken (JP)**

(74) Representative: **Selting, Günther, Dipl.-Ing., Deichmannhaus am Hauptbahnhof, D-5000 Köln 1 (DE)**

(54) Shutter arrangement for a disc cartridge.

(57) In a disc cartridge comprising a cartridge case having recording head and spindle insertion hole and a shutter movably mounted on the cartridge case for moving between an opened position and closing position where the recording head and spindle insertion hole are closed, said shutter is mounted on a slider movably mounted along one edge portion of the cartridge case, wherein the improvement comprises a stopper for releasably maintaining the shutter in the closed position when the disc cartridge is not used.

TITLE OF THE INVENTION

SHUTTER ARRANGEMENT FOR A DISC CARTRIDGE

BACKGROUND OF THE INVENTION

FIELD OF THE INVENTION

The present invention relates to a disc cartridge, and more particularly, to a shutter arrangement for opening and closing spindle insertion openings and head insertion openings to prevent entrance of foreign matters in the disc cartridge.

DESCRIPTION OF THE PRIOR ART

In the disc cartridge having a disc shaped recording medium (referred to as recording disc hereinafter) which is mounted on a disc drive device and information is recorded in the recording disc or information recorded in the recording disc is reproduced by magnetic or optical means, there are provided one or more openings for receiving a spindle of the disc drive device for rotating the recording disc and for receiving a recording and reproducing head of the disc drive device. If the openings are kept uncovered, the foreign matters such as dust like can enter in the openings and contact the recording disc so that the recording disc may be stained or damaged. In order to prevent this problem, conventionally there has been known to public to movably mount a shutter on the disc cartridge for closing the openings.

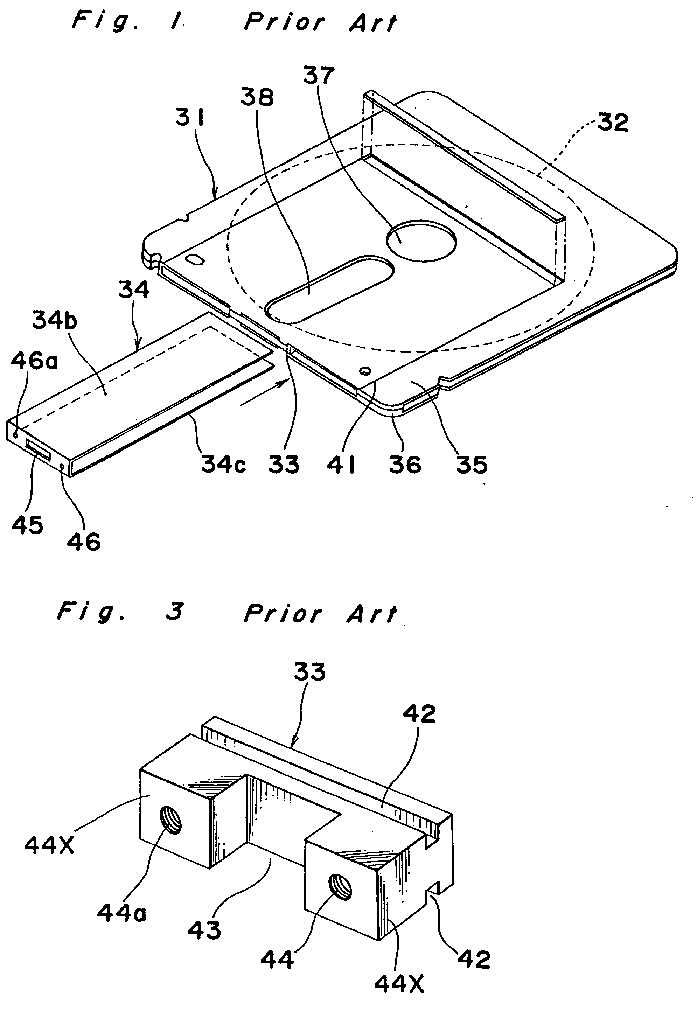

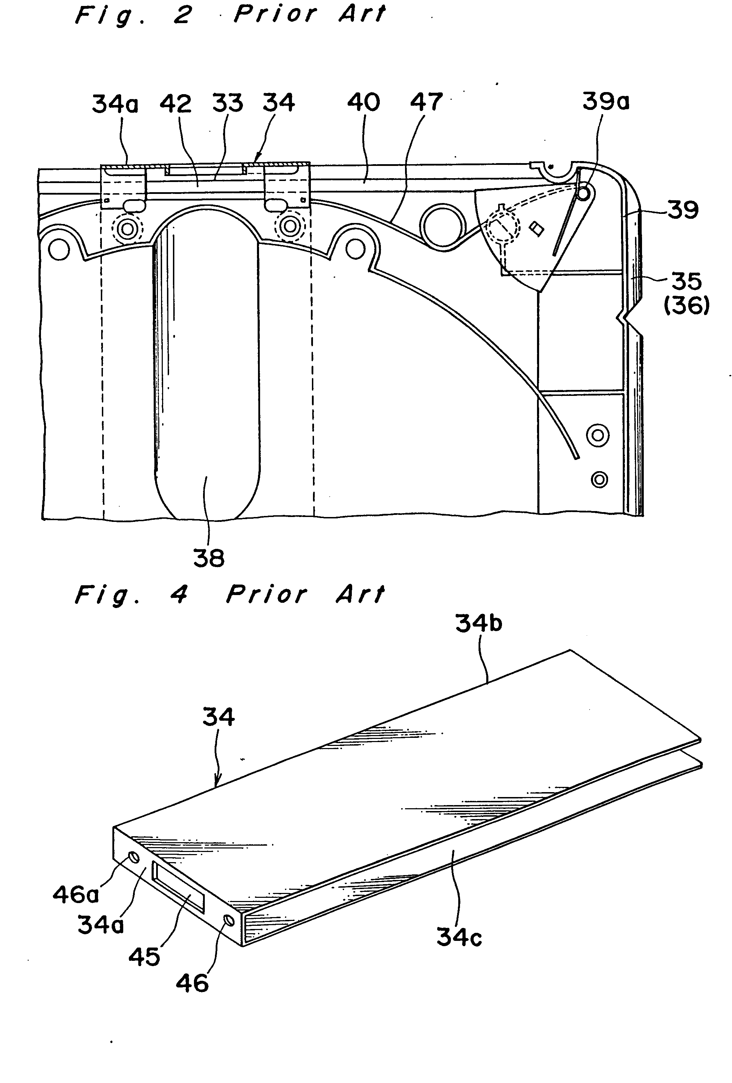

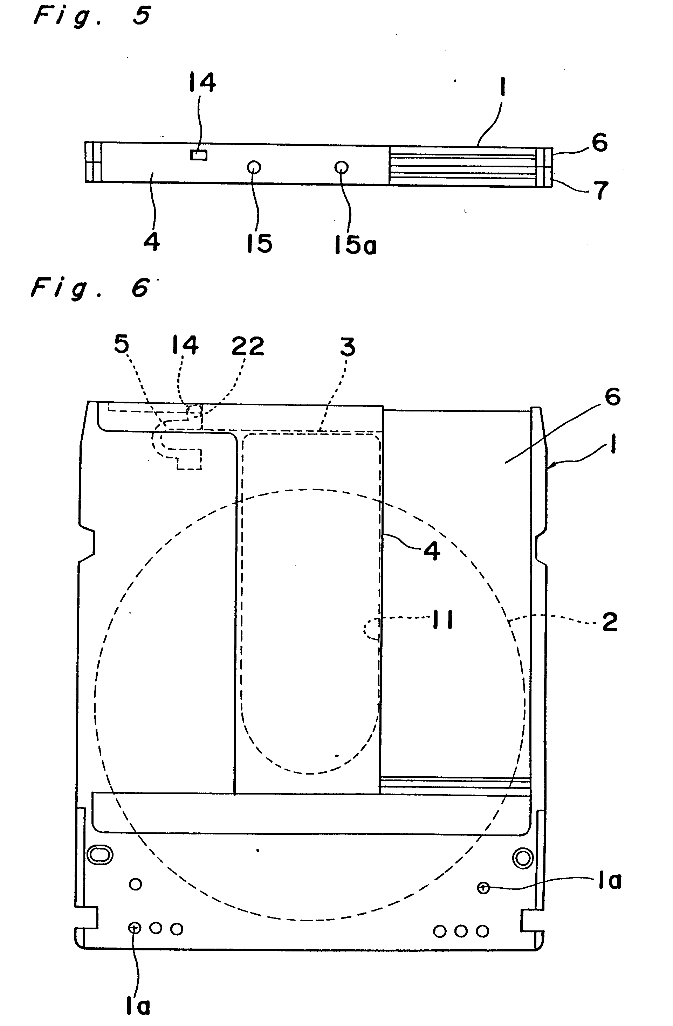

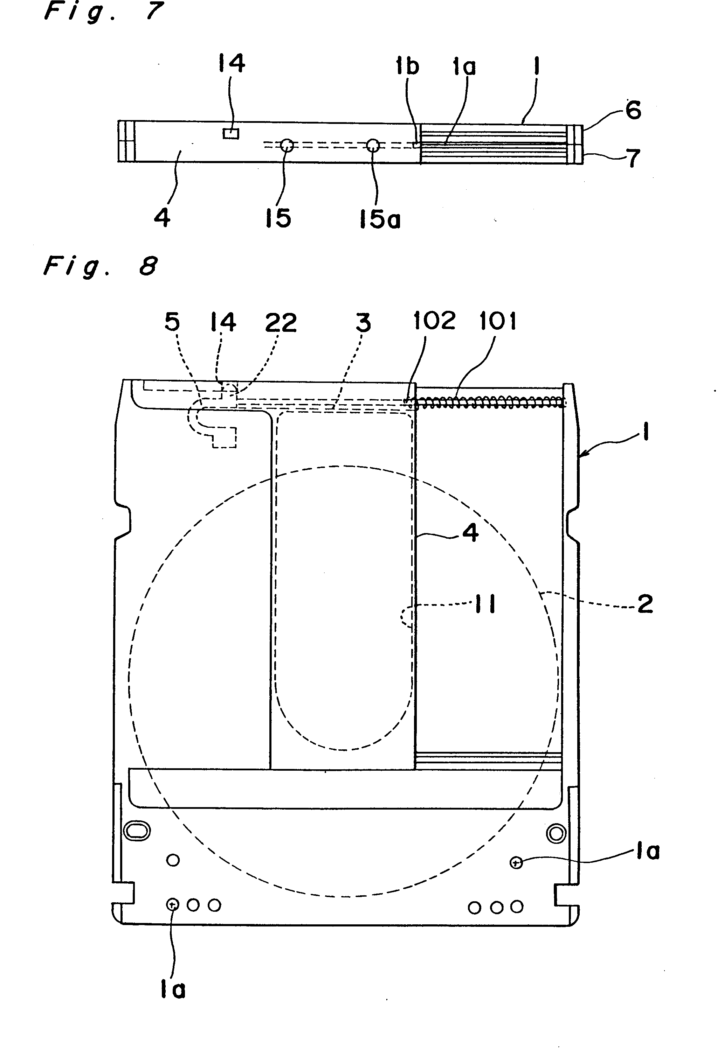

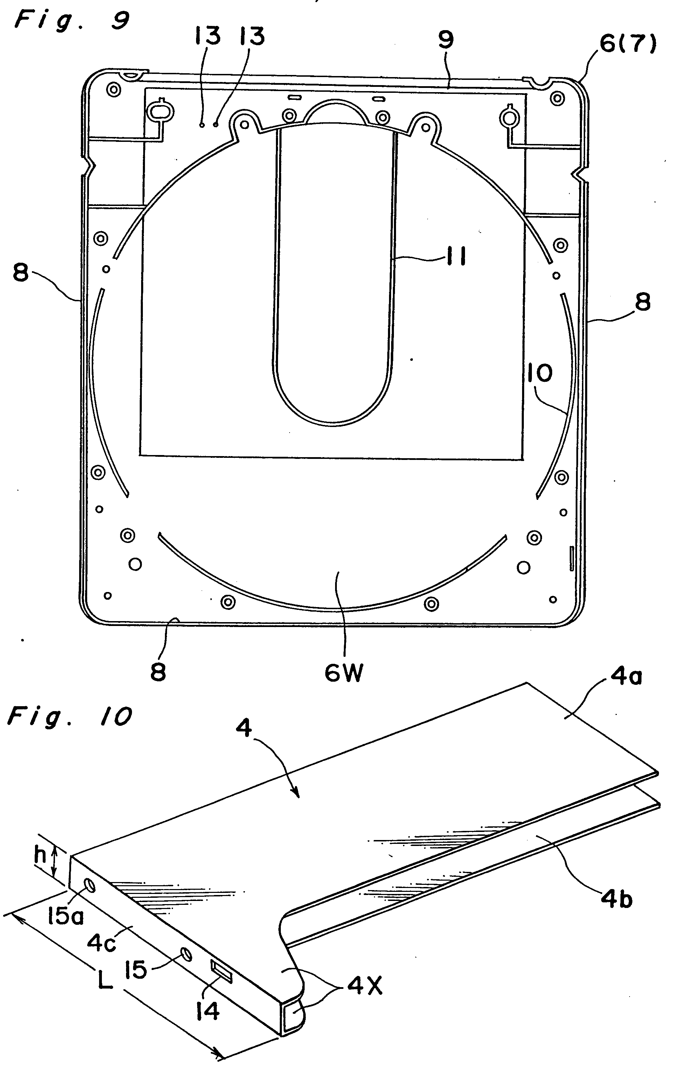

Figs. 1 to 4 show one example of the disc cartridge having the shutter mentioned above, in which 31 denotes a cartridge case made of plastic resin, 32 denotes a recording disc rotatably mounted in the cartridge case 31, 33 denotes a slider which is slidably mounted on a front edge of the cartridge case 31 i.e., the leading edge when the cartridge case is inserted into the disc drive device and 34 denotes a shutter made of metal and mounted on the slider 33.

The cartridge case 31 is formed by an upper case 35 and a lower case 36 each of which is made of a shallow saucer shape and opposed and combined together so as to provided a chamber. The recording disc 32 and various components including a spring mentioned later are accommodated in the chamber. Both of the upper and lower cases 35 and 36, respectively have spindle holes 37 of a round shape and a head insertion holes 38 of an elongated shape extending in a radial direction of the recording disc 32 in the symmetrical positions so that both of the spindle insertion holes 37 and also the head insertion holes 38 can oppose respectively when both cases are assembled. As shown in Fig. 2, a guide rib 40 is formed with the height lower than the peripheral wall 39 so as to extend linearly along the front edge of each of the upper and lower cases 35 and 36 at the portion slightly inwardly away from the front edge. A supporting column 39a for securing a spring member 47 is projected at one corner of the lower case 35 inwardly away from the peripheral wall 39 which is connected to one end of the guide rib 40. The major front half portion of the outer surface of each of the upper and lower cases 35 and 36 is slightly lowered so as to slidably receive the shutter 34 and a stepped edge 41 is formed on the side opposite to the said corner where the supporting column 39a is provided, whereby one side edge of the shutter can engage with the stepped edge 41 when the shutter 34 closes the spindly hole 37 and head insertion hole 38.

As shown in Fig. 3, said slider 33 has a generally U shape with a pair of straight slots 42 which can be slidably engaged with the guide ribs 40 of the both upper and lower cases 35 and 36. A space 43 between two projections 44x acts to receive a shutter moving lever (not shown) of the disc drive device. Screw holes 44 and 44a are defined in the projections 44x.

The slider 33 is assembled in the cartridge case as shown in Fig. 2 with the slots 42 slidably fitted to the guide ribs 40 of the both cases 35 and 36.

The shutter 34 is formed by bending a metal sheet in the form of generally U character shape as shown in Fig. 4, with a front wall 34a formed between the shutter plates 34b and 34c and a through hole 45 is defined in the central portion of the front wall 34a for insertion of the shutter opening lever (not shown) of the disc drive device. A pair of screw holes 46 and 46b are defined on both sides of the hole 45 corresponding to the holes 44 and 44a of the slider 33.

The shutter 34 is assembled to the slider 33 in such a manner that the shutter plates 34b and 34c cover the outer faces of the cartridge case 31 with the front plate 34a engaged with the projections 44x and the shutter 34 is secured to the slider by fastening screws inserted in the through holes 46, 46a, 44 and 44a.

The spring 47 is suspended in such a manner that one end of the spring 47 is engaged with the supporting column 39a and the other end of the spring 47 is engaged with the side face of the slider 33, whereby the shutter 33 and slider 34 are normally forced toward the closed position for closing the spindle holes 37 and the head insertion holes 38.

When the disc cartridge mentioned above is mounted in the disc drive device, as the disc cartridge is entered in the disc drive device, the shutter operating lever (not shown) of the disc drive device is engaged in the space 43 of the slider 33 through the hole 45 of the shutter 34 and the shutter 34 can be opened by the shutter operating member against the force of the spring 47. When the disc cartridge is removed from the disc drive device, the shutter operating lever is retracted to the original position and the shutter 34 returns to the closed position by the force of the spring 47 to close the spindle holes 37 and the head insertion holes 38.

In the conventional shutter arrangement of the disc cartridge mentioned above, since the shutter is normally biassed to the closed position by means of the spring 47, the resilient force of the spring 47 is weakest when the shutter is at the closed position.

To increase the recovering force of the spring 47 enables to increase the force to hold the shutter at the closed position but requires an increased force to move the shutter 34 toward the opened position, whereby the force of mounting the disc cartridge in the disc drive device increases, thereby lowering the feeling of mounting of the disc cartridge to the disc drive device. Therefore, it is not desired to increase the recovering force of the spring.

As it is undesirable to increase the force of the spring for moving the shutter in the conventional disc cartridge by the reason mentioned above, the shutter tends to be vibrated and opened away from the closed position by unexpected external force due to the weak force of the spring to hold the shutter at the closed position, whereby foreign matters such as dust or the like enters inside the disc cartridge and fit to the recording disc.

Moreover, since the shutter is easily displaced from the correct closed position due to vibration, whereby it is difficult to set the disc cartridge in the disc drive device such that the hole 45 of the shutter coincides with shutter moving lever of the disc drive device.

SUMMARY OF THE INVENTION

An essential object of the present invention is to provide a disc cartridge in which the shutter can be maintained in the correct closed position when the disc cartridge is not in use.

Another object of the present invention is to provide a disc cartridge which enables to prevent undesired displacement or vibration of the shutter when the disc cartridge is not used.

According to the present invention, there is provided with a disc cartridge comprising a cartridge case made of an upper case and a lower case each having at least one recording head and spindle insertion hole, recording medium of a disc shape rotatably accommodated in the cartridge case, a shutter movably mounted on the cartridge case for moving between an opened position and closing position where the recording head and spindle insertion hole are closed and a slider movably mounted along one edge portion of the cartridge case and connected with the shutter, wherein the improvement comprises a stopper for releasably maintaining the shutter in the closed position when the disc cartridge is not used.

BRIEF DESCRIPTION OF THE DRAWINGS

Fig. 1 is a perspective view of an example of a conventional disc cartridge,

Fig. 2 is an enlarged top plan view showing an essential portion of the inside of the disc cartridge shown in Fig. 1,

Fig. 3 is a perspective view showing an example of a slider used in the disc cartridge shown in Fig. 1,

Fig. 4 is a perspective view showing an example of a shutter used in the disc cartridge shown in Fig. 1,

Fig. 5 is a front view showing an example of a disc cartridge according to the present invention,

Fig. 6 is a top plan view of a disc cartridge shown in Fig. 5,

Fig. 7 is a front view showing a modification of the disc cartridge according to the present invention,

Fig. 8 is a top plane view of the disc cartridge shown in Fig. 5,

Fig. 9 is an inside plan view showing inside of the upper case of the disc cartridge shown in Fig. 6,

Fig. 10 is a perspective view showing an example of a shutter used in the disc cartridge shown in Fig. 6,

Fig. 11 is a perspective view showing an example of a slider used in the disc cartridge shown in Fig. 6,

Fig. 12 is a top plan view showing a way of mounting the stopper used in the disc cartridge shown in Fig. 6,,

Fig. 13 is a perspective view showing an example of
the stopper used in the disc cartridge shown in Fig. 6,

Fig. 14 is a top plan view showing a state of the
stopper when the disc cartridge is not used,

Figs. 15 and 16 are respectively top plan views
showing operation of the stopper,

Figs. 17 and 18 are top plan views showing
modifications of the shutter moving lever opening,

Figs. 19 through 21 are respectively top plan views
showing various modifications of the stopper, and

Fig. 22 is a cross sectional view showing another
modification of the disc cartridge according to the present
invention.


DETAILED DESCRIPTION OF THE PREFERRED EMBODIMENT

Referring to Figs. 5 and 6, a disc cartridge
according to the present invention generally comprises a
cartridge case 1 made of plastic resin material, recording
disc 2 rotatably mounted in the cartridge case 1, a slider 3
slidably mounted on the front edge portion of the cartridge
case 1, a shutter 4 mounted on the slider 3 and a stopper 5
for stopping the shutter 4 in the closed position.

The cartridge case 1 is constituted in a similar
manner as the cartridge case 31 mentioned with reference to
Figs. 1 to 4 except that the supporting column 39a is omitted and the spindle insertion hole 37 and the head insertion hole 38 of are communicated in one elongated hole 11. The cartridge case 1 is formed by the upper case 6 and the lower case 7 and both cases 6 and 7 can be assembled and fixed together by screws 1a to provide the cartridge case having a chamber for accommodating the recording disc 2, the stopper 5 and other necessary components.

Figs. 7 and 8 show another example of the disc cartridge having a spring 101 for returning the shutter to its closed position, wherein the spring 101 is in the form of a coil, which is fitted to a supporting bar 102 extending along the front edge of the cartridge case 1. One end of the spring 101 is engaged with the end of the slider 3

Referring to Fig. 9, the upper case 6 and lower case 7 have respectively peripheral walls 8 surrounding the respective peripheral edges except for the front edge which acts as the leading edge when the cartridge case is inserted in the disc drive device. Since both of the upper case 6 and lower case 7 have substantially the same configuration, the following description is made with respect to one of the cases 6 and 7. On the front edge of the cartridge case, there is formed a guide rib 9 with the height lower than the peripheral wall 8 extending straightly. A plurality of partition walls 10 are formed in the interior of the upper case 6 surrounded by the peripheral wall 8 and the guide rib 9 in a generally circular shape with the substantially same height of the peripheral wall 8.

an elongated hole 11 is defined in the upper wall
6W so as to extend from the central portion to a portion
inwardly adjacent to the front edge for receiving the
spindle and the recording head of the disc drive device. A
pair of pin like projections 13 are formed on the upper wall
6W of the upper case 6 in one of the corner portion
surrounded by the peripheral wall 8, partition wall 10 and
the guide rib 9 for detachably securing a stopper which will
be explained in detail later.

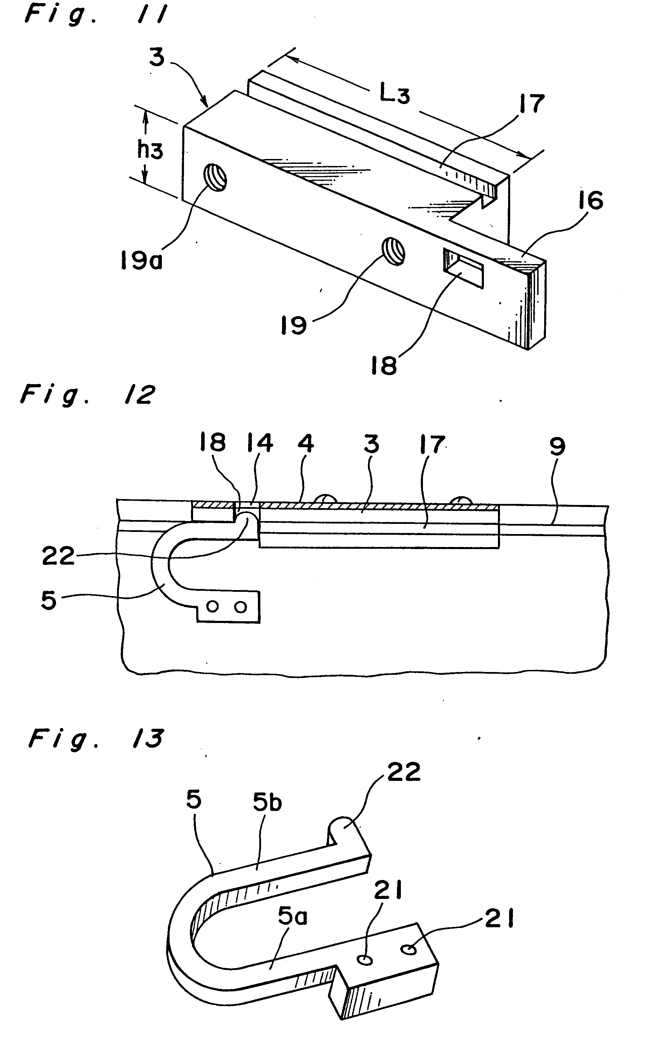

The shutter 4 is formed of opposing shutter plates
4a and 4b and a front plate 4c connecting the both plates 4a
and 4b as shown in Fig. 10 by bending a stainless metal
sheet in a U character shape. The shutter plates 4a and 4b
have a length and width sufficient to cover the respective
elongated holes 11 and the front portions of the shutter
plates 4a and 4b near the front plate 4c are expanded by the
portions 4x. The height of the front plate 4c is
substantially the same or slightly greater than the
thickness of the cartridge case 1. A shutter moving lever
insertion opening 14 of a rectangular shape is defined in
the front plate 4c at a position displaced to the plate 4a
and near the expanded portion 4x. Two screw holes 15 and
15a are defined on the center line of the front plate 4c.

The slider 3 is formed of a generally rectangular
body with its one face extended to form a projected plate 16 as shown in Fig. 11 and a height h3 and length L3 thereof are slightly smaller than the height h and length L of the front plate 4c of the shutter 4. Said projected plate 16 is may be formed by cutting a portion of the body 3. A pair of guide slots 17 (only top guide slot 17 is depicted in Fig. 11) are formed along the upper and lower faces of the slider 3 straightly so as slidably to fit in the guide ribs 9 of the cartridge case. An opening 18 of generally rectangular shape is defined in the projected plate 16 corresponding to the shutter moving lever insertion opening 14 for the shutter 4 and two screw holes 19 and 19a are defined corresponding to the screw holes 15 and 15a of the shutter. The slider 3 is made of plastic resin material having a good slidability such as nylon, tetrafluoroethylene, polyethylene, polyacetal, polypropylene, metallic sheet material having a good slidability, ceramic or carbon material.

The slider 3 is slidably engaged with the guide ribs 9 as shown in Fig. 12 so that the slider 3 can move along the front edge of the cartridge case 1. The shutter 4 is movably mounted on the cartridge case 1 in such a manner that both of the shutter plates 4a and 4b face to the upper wall of the upper case 6 and the lower wall of the lower case 7 respectively with the front plate 4c secured to the front face of the slider 3 by the screws passed through the holes 46 and 46a and fasted in the holes 19 and 19a. The free ends of the shutter 4 may be slidably pressed toward the surface of the cartridge case by a pressing plate (not shown) for preventing the shutter plates 4a and 4b from being separated away from the cartridge case.

The stopper 5 is formed in a U character shape by plastic resin material having two legs 5a and 5b as shown in Figs. 12 and 13. The free end portion of the leg 5a is provided with a pair of engaging holes 21 which is engaged with the projection 13 for securing the stopper 5 to the upper case 6 and the end of the leg 5b is provided with an engaging tip 22 projected outwardly and perpendicualarly to the longitudinal direction of the leg 5b for engaging in the opening 18 of the slider 3. The stopper 5 is made of plastic resin material having a good slidability and resiliency such as polyamid, nylon, tetrafluoroethylene, polyethylene, polyacetal, polypropylene, ABS resin or PVC or resilient metallic plate.

The stopper 5 is secured to the top case 6 by engaging the engaging holes 21 with the projections 13 so that the engaging tip 22 is engaged in the opening 18 of the slider 3.

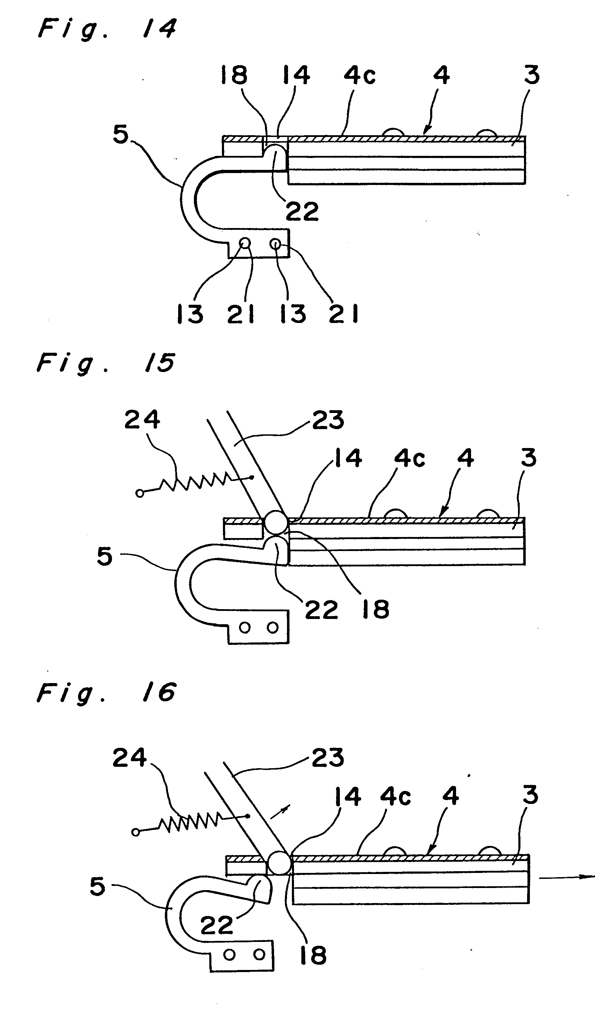

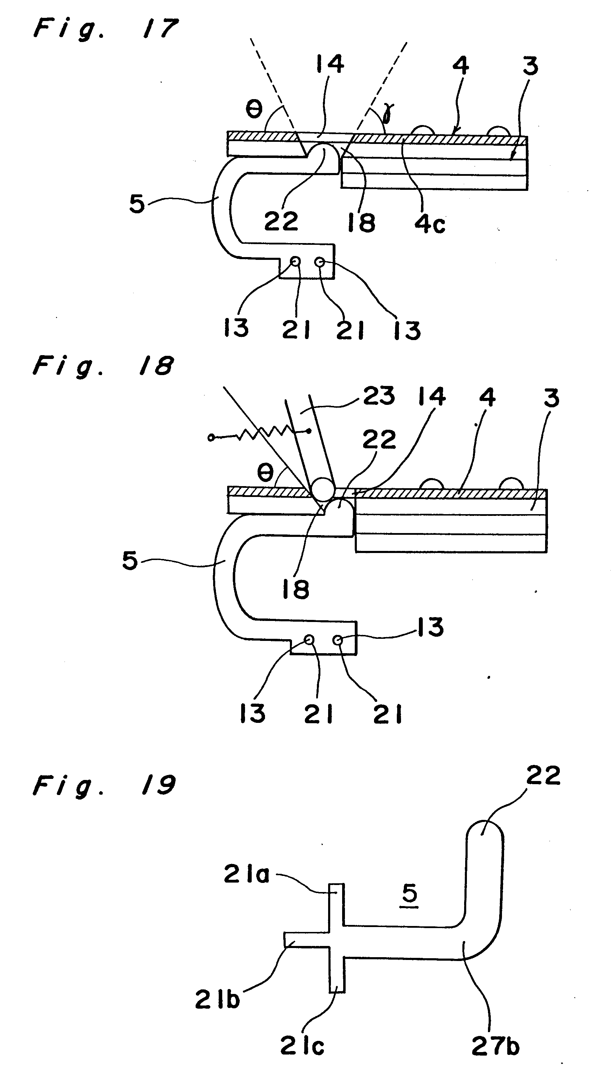

When the disc cartridge according to the embodiment mentioned above is not in use, the engaging tip 22 is fitted in the opening 18 of the slider 3 as shown in Fig. 14 and the shutter 4 is fixedly located in the position to cover the spindle insertion holes 11 and head insertion holes 12. When the disc cartridge is mounted in the disc drive device, the free end of the shutter moving lever 23 of the disc drive device is inserted in the opening 18 of the slider 3 through the hole 14 of the shutter 4 and the engaging tip 22 is pushed from front by the shutter moving lever 23. Further insertion of the disc cartridge in the disc drive device causes the engaging tip 22 to be moved away from the opening 18 and when the engaging tip 22 is disengaged from the opening 18, the shutter 4 can be opened by the movement of the shutter moving lever 23. When the disc cartridge is ejected from the disc drive device, the shutter moving lever 23 is moved in a reversed direction by the pulling force of the spring 24, whereby the shutter 3 can be moved to the closed position, and when the shutter 3 is retracted to the closed position where the shutter 3 close the spindle and head insertion holes 11, the stopper 5 can be engaged in the opening 18, whereby the shutter 3 is maintained in the closed position. Preferably the entrance of the shutter insertion opening 14 is enlarged so as to assure that the end of the shutter moving lever 23 can easily and surely entered in the shutter lever insertion opening 14 irrespective of present of the geometric error of the free end of the shutter moving lever 23. For this purpose, the openings 14 and 18 may be tapered by the angles θ or γ in such a manner that the entrance portion is wider as shown in Fig 17. The angles θ and γ may be in the range of 45° to 90° and preferably the angles may be in the range of 45° to 60°. While it is possible to form the openings 14 and 18 as shown in Fig. 18 with the angle γ to be 90° and

the angle θ to be in the range of 45° to 60°.

In the disc cartridge mentioned above, since the stopper 5 is provided for maintaining the shutter 4, the shutter 4 can be locked in the closed position for closing the spindle and head insertion hole 11 when the disc cartridge is not used. Accordingly, the shutter 4 can not be opened by a weak force as occurred in the prior art, the foreign matters can not enter inside of the cartridge case and vibration of the shutter 4 can be prevented. Moreover, the U shaped stopper enables to save the space therefore.

In place of securing the stopper 5 by inserting the projections 13 in the holes 21 of the stopper 5, the stopper 5 may be secured to the upper case by adhering agent or welding method or other suitable securing method may be used.

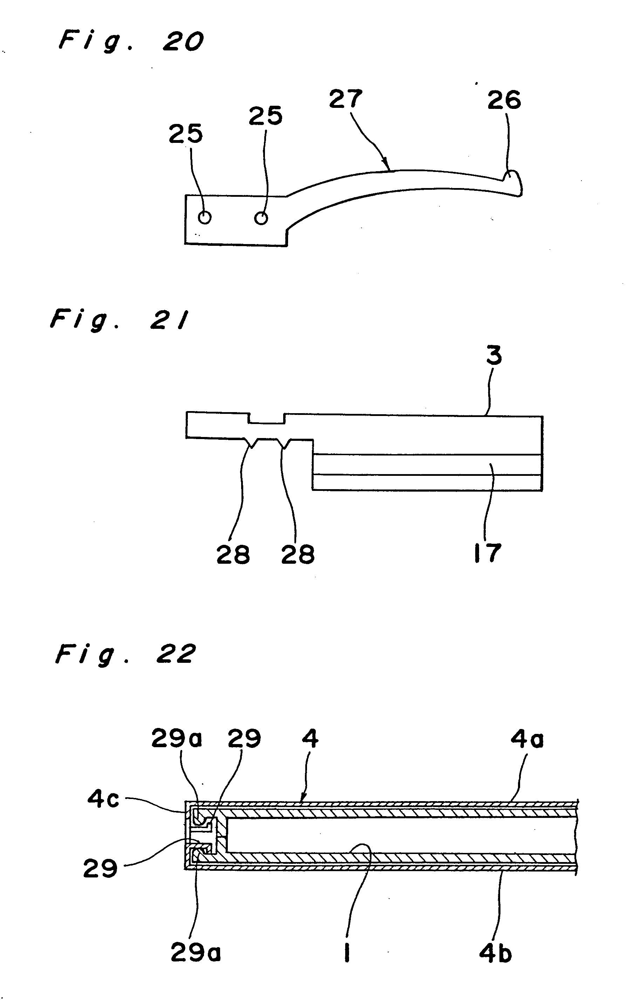

The shape of the stopper is not limited to the U character shape but it may be possible to form the stopper by an elongated member as shown in Fig. 20 with the holes 25 defined and the projected tip 26 formed on the free end portion of the stopper body 27.

The stopper 5 may be formed in a shape as shown in Fig. 19, in which the engaging tip 22 is formed at the bent end of the plate 27b and another end is formed with a cross shaped members 21a, 21b and 21c which are fitted in a
recesses formed in the cartridge case complementary to the
cross shaped members 21a to 21c for securing the stopper 5.

There are various ways of engaging the stopper and
the shutter, for example, two projections 28 projected
toward the recording disc may be formed on the slider 3 as
shown in Fig. 21 so that the engaging tip of the stopper 5
can be engaged with the projections 28.

Moreover in the embodiment shown, the shutter
arrangement including the shutter 3 and the stopper 5 is
secured to the cartridge case 1 through the slider 3, the
shutter arrangement with the stopper 5 may be mounted on
such a disc cartridge in which the shutter is mounted to
the  front edge of the cartridge case 1 directly.  In this
case, the shutter moving lever insertion opening 14 may be
commonly used as the engaging means for engaging with the
shutter.  It may be possible to define the means for
engaging with the stopper 5 may be provided other various
place in place of the shutter moving lever insertion opening
14.

One example of the disc cartridge in which the
shutter 3 is installed on the front edge portion of the
cartridge case is shown in Fig. 22.

Referring to Fig 22, two engaging tips 29 are
projected toward the inner portion of the shutter from the
front plate 4c of the shutter 4 with the free ends of the respective engaging tips 29 bent in the opposite direction. While a pair of receiving ribs 29a are formed at the front edge of the cartridge case 1 so as to project toward the center with respect to the thickness of the cartridge case. The shutter 4 is mounted to the cartridge case by engaging the engaging tips 29 with the receiving ribs 29a.

Also the the shutter arrangement according to the present invention may be employed in such disc cartridge having a shutter returning spring as shown in Fig. 2 or other configuration of the shutter returning spring as shown in Fig. 8. In this case, the shutter can be stably maintained in the closed position because the shutter can be kept not only by the stopper but also by the shutter returning spring, whereby the dust proof effect can be improved.

Moreover the shutter may be secured to the slider by adhesion using adhesive agent or welding in place of using screws.

One advantage of the disc cartridge according to the present invention is in that there is provided a stopper for releasably keeping the shutter in the closed position, so that the shutter can be prevented from undesired vibration or displacement when the disc cartridge is not used, it is assured to close the head insertion opening and spindle insertion opening by the shutter, whereby it is possible to prevent entrance of the foreign matters such as dust or the like in the disc cartridge resulting in keeping the recording disc clean.

It is noted that the recording disc may be magnetic recording disc, optical recording disc or optical magnetic recording disc.

WHAT IS CLAIMED IS

1.      A disc cartridge comprising a cartridge case made of an upper case and a lower case each having at least one recording head and spindle insertion hole, recording medium of a disc shape rotatably accommodated in the cartridge case, a shutter movably mounted on the cartridge case for moving between an opened position and closing position where the recording head and spindle insertion hole are closed and a slider movably mounted along one edge portion of the cartridge case and connected with the shutter, wherein the improvement comprises a stopper for releasably maintaining the shutter in the closed position when the disc cartridge is not used.

2.      The disc cartridge according to claim 1, wherein said stopper is provided with a resilient free end which is detachably engageable with an engaging portion formed on the slider.

3.      The disc cartridge according to claim 1, wherein said slider comprises at least one opening defined in position corresponding to a shutter moving lever insertion opening defined in the shutter.

4.      The disc cartridge according to claim 1, wherein said slider comprising projections projected toward the recording medium for engaging with the stopper.

5.      The disc cartridge according to claim 1, wherein said shutter comprises engaging tips projected in one direction and said cartridge case comprises engaging ribs for engaging with the engaging tips of the shutter.

6.      The disc cartridge according to claim 1 wherein said shutter can be moved freely by the external force.

7.      The disc cartridge according to claim 1 further comprising spring means for retracting the shutter to the closed position.

8.      The disc cartridge according to claim 1, wherein said stopper is made of plastic resin material with a suitable resiliency and is formed in a U character shape having a pair of legs with one end of one leg being provided with securing means for securing the stopper in the cartridge case and one end of the another leg being provided with an engaging tip engageable with the engaging portion of the slider.

9.      The disc cartridge according to claim 1, wherein said stopper is made of plastic resin material with a suitable resiliency and is formed in a straight shape having its one end provided with securing means for securing the stopper to the cartridge case and having another end formed an engaging tip engageable in an opening defined in the shutter or slider.

10.      The disc cartridge according to claim 1, wherein said shutter and slider comprise openings for receiving shutter moving lever with the opening tapered inwardly narrowed.

11. The disc cartridge according to claim 10, wherein said tapered opening is formed in the slider.

12. The disc cartridge according to claim 10, wherein the angle of the tapered portion is in the range of 45° to 90° with respect to the direction of the movement of the shutter.

Fig. 1    Prior Art

37

38    31    32

34

34b

46a    34c  33   41   36   35

45

46

Fig. 3    Prior Art

33

42

44X

44a   43   44   42

44X

Fig. 2 Prior Art

34a  42  33  34    40   47          39a

                                        39

                                        35
                                        (36)

38

Fig. 4 Prior Art

34b

34

46a
34a
45
46
34c

Fig. 5

Fig. 6

**Fig. 7**

**Fig. 8**

0 218 231

Fig. 9

Fig. 10

Fig. II

Fig. 12

Fig. 13

Fig. 14

Fig. 15

Fig. 16

Fig. 17

Fig. 18

Fig. 19

Fig. 20

Fig. 21

Fig. 22